# EUROPÄISCHE PATENTANMELDUNG

(11) **EP 1 013 522 A2**
(43) Veröffentlichungstag der Anmeldung: **28.06.2000**
(21) Anmeldenummer: 99122837.0
(22) Anmeldetag: 17.11.1999
(51) Int. Cl.: B60T 8/00, B60T 8/32, F16D 69/00

(54) **Verfahren zur Betätigung einer Bremseinheit**

(30) Priorität: 23.12.1998 DE 19859617
(71) Anmelder: DaimlerChrysler AG, 70567 Stuttgart (DE)
(72) Erfinder: Näumann, Emil, 73061 Ebersbach (DE); Riedel, Hans-Georg, 75177 Pforzheim (DE)

(57) **Zusammenfassung**

Die vorliegende Erfindung betrifft ein Verfahren zur Betätigung einer Bremseinheit, welche mindestens eine Zuspanneinrichtung, mindestens eine Bremsscheibe mit mindestens einer Reibfläche und mindestens einer Bremsbacke mit mindestens einem Reibbelag aufweist, der bei der Betätigung der Bremseinheit über eine Spannkraft Fs der Bremsbacke auf die mindestens eine Reibfläche der mindestens einen Bremsscheibe einwirkt, wobei zumindest die mindestens eine Reibfläche der mindestens einen Bremsscheibe aus einem Metall-Keramik-Verbundwerkstoff (CMC) gebildet ist, wobei mindestens eine Steuerungseinrichtung vorgesehen ist, mittels derer die Spannkraft Fs der mindestens Bremsbacke beim Bremsvorgang so gesteuert wird, daß ein definiertes Bremsmoment Mb als Funktion der Spannkraft Fs resultiert. Erfindungsgemäß ist vorgesehen, daß die Spannkraft der Bremsbacke durch eine Druckerhöhung so gesteigert wird, daß ein im wesentlichen linear verlaufendes Bremsmoment resultiert. Die vorliegende Erfindung betrifft ferner eine Bremseinheit zur Durchführung dieses Verfahrens mit einer elektrohydraulischen Steuereinrichtung.

## Beschreibung

Die vorliegende Erfindung betrifft ein Verfahren zur Betätigung einer Bremseinheit, welche mindestens eine Zuspanneinrichtung, mindestens eine Bremsscheibe mit mindestens einer Reibfläche und mindestens einer Bremsbacke mit mindestens einem Reibbelag aufweist, der bei der Betätigung der Bremseinheit über eine Spannkraft Fs der Bremsbacke auf die mindestens eine Reibfläche der mindestens einen Bremsscheibe einwirkt, wobei zumindest die mindestens eine Reibfläche der mindestens einen Bremsscheibe aus einem Metall-Keramik-Verbundwerkstoff (CMC) gebildet ist, wobei mindestens eine Steuerungseinrichtung vorgesehen ist, mittels derer die Spannkraft Fs der mindestens Bremsbacke beim Bremsvorgang so gesteuert wird, daß ein definiertes Bremsmoment Mb als Funktion der Spannkraft Fs resultiert. Die vorliegende Erfindung betrifft ferner eine derartige Bremseinheit.

Die bisher üblichen Bremseinheiten bspw. in Kraftfahrzeugen sind mit Bremsscheiben bzw. Bremsscheibenrotoren aus Eisenguß-Material, bspw. Grauguß bestückt. Beim Zusammenwirken mit den Reibbelägen der Bremsbacken während des Bremsvorgangs besteht ein annähernd linearer Zusammenhang zwischen der einwirkenden Spannkraft Fs der Bremsbacke und dem resultierenden Bremsmoment Mb. Mit anderen Worten: Das Bremsmoment Mb als Funktion der Spannkraft verläuft linear. Für den Kraftfahrer resultiert dies in einer bestimmten Betätigungscharakteristik der Bremnseinheit bei handelsüblichen Servosystemen, wobei er während des Bremsvorgangs das "Gefühl" hat, die Bremswirkung sei um so stärker, je kräftiger er das Bremspedal betätigt und nehme mit zunehmenden Druck auf das Bremspedal kontinuierlich zu.

In zunehmendem Maße werden Bremsscheiben bzw. Bremsscheibenrotoren entwickelt, die aus Keramik-Metall-Verbundwerkstoffen (CMC) bestehen, bzw. deren mit den Reibbelägen der Bremsbacken zusammenwirkende Reibfläche aus einem Keramik-Metall-Verbundwerkstoff (CMC) besteht. Bremseinheiten, die mit derartigen Bremsscheiben bestückt sind, weisen jedoch bei den handelsüblichen Servosystemen eine andere Bremscharakteristik auf als die soeben beschriebenen herkömmlichen Bremseinheiten. Insbesondere ist das resultierende Bremsmoment Mb als Funktion der Spannkraft Fs nicht mehr linear, sondern konvergiert gegen einen Maximalwert, d.h. die Steigung wird mit zunehmendem Bremsdruck flacher. Damit ändert sich aber die Bremskraftverteilung auf die einzelnen Räder. Der Autofahrer spürt dies daran, daß die Bremsleistung mit zunehmendem Druck auf das Bremspedal nicht mehr kontinuierlich ansteigt, sondern sich nur noch in geringem Maße steigern läßt. Die gewohnte Betätigungscharakteristik ist nicht mehr vorhanden. Dies wird als Unsicherheitsfaktor empfunden.

Aufgabe der vorliegenden Erfindung ist es daher, ein Verfahren der o.g. Art bereitzustellen, mit dem unter Beibehaltung der handelsüblichen Servosysteme die gewohnte Betätigungscharakteristik wieder hergestellt wird und die bewährte Bremskraftverteilung auf einzelne Räder erreicht wird. Aufgabe der vorliegenden Erfindung ist es ferner, eine Bremseinheit bereitzustellen, mit der diese Ziele erreicht werden können.

Die Lösung besteht darin, daß die Spannkraft der Bremsbacke durch eine Druckerhöhung so gesteigert wird, daß ein im wesentlichen linear verlaufendes Bremsmoment resultiert.

Durch eine derartige Druckerhöhung, welche von der Steuerungseinheit bewirkt wird, wird also erreicht, daß auch bei handelsüblichen Servosystemen in Verbindung mit Bremseinheiten mit Bremsscheiben bzw. Reibflächen aus Keramik-Metall-Verbundwerkstoff das Bremsmoment Mb als Funktion der Spannkraft Fs linear verläuft. Damit ist die gewohnte Betätigungscharakteristik wiederhergestellt, d.h. für den Kraftfahrer steigt die Bremsleistung kontinuierlich mit dem Druck auf das Bremspedal. Die bewährte Bremskraftverteilung auf einzelne Räder ist gewährleistet.

Die erfindungsgemäße Bremseinheit zeichnet sich dadurch aus, daß sie ein elektrohydraulisches Betätigungssystem aufweist, mittels dessen die Spannkraft der Bremsbacke durch eine Druckerhöhung so steigerbar ist, daß ein im wesentlichen linear verlaufendes Bremsmoment resultiert.

Vorteilhafte Weiterbildungen ergeben sich aus den Unteransprüchen. Die Druckerhöhung wird in vorteilhafter Weise durch Aufschalten einer in der Steuerungseinrichtung gespeicherten Drukkerhöhungsfunktion erreicht, wobei bspw. eine etwa parabelförmige Druckerhöhungsfunktion aufgeschaltet wird.

Die Druckerhöhung kann als Funktion der momentanen Bremsleistung oder als Funktion der Verzögerung bestimmt werden.

Die Steuereinrichtung der erfindungsgemäßen Bremseinheit wirkt vorzugsweise auf den hydraulischen Druck in der Zuspanneinrichtung ein.

Eine weitere vorteilhafte Weiterbildung sieht vor, daß zumindest die Reibfläche des Bremsscheibenrotors oder der gesamte Bremsscheibenrotor oder die gesamte Bremsscheibe aus einem Keramik-Metall-Verbundwerkstoff, vorzugsweise aus einem Aluminium-Keramik-Verbundwerkstoff, bspw. auf Basis von Aluminiumoxid, Titandioxid, Bortrioxid und/oder Titanborid mit Aluminium, wie er bspw. in der deutschen Patentanmeldung 197 06 925.8-45 beschrieben ist, oder einem Siliziuim-Keramik-Verbundwerkstoff, bspw. auf der Basis von Siliziumcarbid, bestehen. Besonders bevorzugt ist ein faserverstärkter Verbundwerkstoff, welcher als Verstärkungsfasern bspw. Kohlefasern und/oder Siliziumcarbidfasern aufweist. Aber auch andere Fasern auf der Basis von Kohlenstoff, Stickstoff, Silizium oder Bor sind geeignet.

Als Verstärkungsfasern sind Langfasern, vorzugsweise in Form von Fasergeweben oder Fasergelegen, geeignet. Besonders bevorzugt sind Kurzfasern, vorzugsweise isotrop orientierte Kurzfasern (vgl. die DE 197 11 829 C1), so daß die Reibfläche bzw. die Bremsscheibe sowohl in Längs- als auch in Querrichtung isotrope, d. h. gleichmäßige Eigenschaften aufweist.

Der Verbundwerkstoff kann als Keramik-Komponente bspw. eine Siliziumcarbid-Keramik oder eine Aluminiumoxid-Keramik aufweisen. Andere Keramiken sind aber auch geeignet.

Die Reibfläche des Bremsscheibenrotors und der Bremsscheibenrotor sind vorzugsweise einstückig ausgebildet sind und bestehen aus demselben Material, also aus einem CMC-Material. Besonders bevorzugt ist es, die gesamte Bremsscheibe einstückig aus einem CMC-Material herzustellen, was die Fertigung besonders einfach und kostengünstig macht.

Im folgenden wird die vorliegende Erfindung anhand der beigefügten Zeichnungen näher erläutert. Es zeigen:
- Figur 1: eine schematische graphische Darstellung des Bremsmomentes Mb als Funktion der Spannkraft Fs und eine ebensolche Darstellung einer Zuspanntunktion (Bremskraft als Funktion der Verzögerung);
- Figur 2: ein Ablautschema des erfindungsgemäßen Verfahrens.

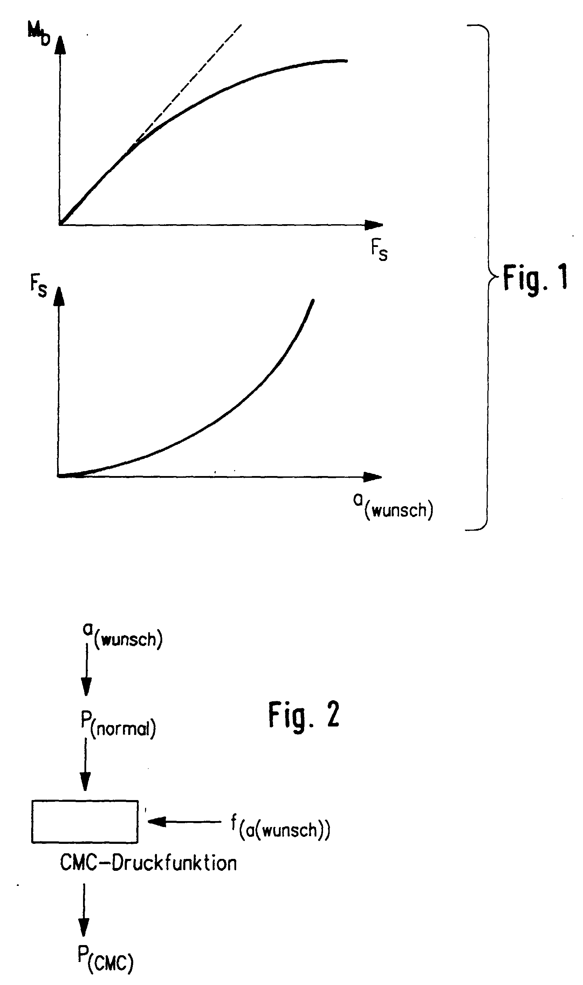

Aus Figur 1 ist zu entnehmen, daß bei CMC-Bremsscheiben bzw. Bremsscheibenrotoren das Bremsmoment Mb als Funktion der Spannkraft Fs der Bremsbacke nicht linear verläuft, sondern gegen einen Maximalwert konvergiert. Um wieder einen linearen Verlauf zu erreichen, wird eine Erhöhung der Spannkraft Es bewirkt. Dies kann in Abhängigkeit der Verzögerung erfolgen, wie dargestellt, aber bspw. auch in Abhängigkeit der momentanen Bremsleistung. Die Erhöhung der Spannkraft Es bewirkt eine Erhöhung des Bremsmomentes Mb, so daß der Verlauf der Kurve wieder linearisiert wird. Vom Kraftfahrer unbemerkt wird damit bei der Betätigung des Bremspedals die Spannkraft Fs der Bremsbacken stärker erhöht, als er "beabsichtigt" hat, mit dem Ergebnis, daß er den Zusammenhang zwischen dem von ihm ausgeübten Druck auf das Bremspedal und der Bremsleistung wieder als "linear" empfindet, d.h. die Bremsleistung steigt kontinuierlich mit dem Druck auf das Bremspedal.

Dies ist in dem in Figur 2 dargestellten Ablaufschema nochmals verdeutlicht. Der Fahrer eines Kraftfahrzeugs möchte bremsen. D.h. er wünscht eine bestimmte Verzögerung a(wunsch). Er betätigt das Bremspedal, woraus ein bestimmter Druck P(normal) der Bremsbacken bzw. der Reibbeläge auf die Reibfläche des Bremsscheibenrotors wirkt. In der Steuereinrichtung der Bremseinheit ist eine "Druckfunktion" gespeichert, die bei der Verzögerung aktiviert wird. Die Steuereinheit addiert diese Druckfunktion zu dein üblichen Druck P(normal), bspw. über ein elektrohydraulisches Betätigungssystem in der Bremseinheit, welches auf den hydraulischen Druck in der Zuspanneinrichtung wirkt und diesen entsprechend der gespeicherten Druckfunktion erhöht. Damit wird ein neuer, höherer Druck P(CMC) auf die Bremsscheibenrotoren ausgeübt. Die Druckfunktion ist so bestimmt, daß bei linearer Steigerung von P(normal) das schließlich resultierende Bremsmoment Ms ebenfalls linear ansteigt.

## Patentansprüche

1. Verfahren zur Betätigung einer Bremseinheit, welche mindestens eine Zuspanneinrichtung, mindestens eine Bremsscheibe mit mindestens einer Reibfläche und mindestens einer Bremsbacke mit mindestens einem Reibbelag aufweist, der bei der Betätigung der Bremseinheit über eine Spannkraft Fs der Bremsbacke auf die mindestens eine Reibfläche der mindestens einen Bremsscheibe einwirkt, wobei zumindest die mindestens eine Reibfläche der mindestens einen Bremsscheibe aus einem Metall-Keramik-Verbundwerkstoff (CMC) gebildet ist, wobei mindestens eine Steuerungseinrichtung vorgesehen ist, mittels derer die Spannkraft Fs der mindestens Bremsbacke beim Bremsvorgang so gesteuert wird, daß ein definiertes Bremsmoment Mb als Funktion der Spannkraft Fs der Bremsbacke resultiert,
**dadurch gekennzeichnet,**
daß die Spannkraft der Bremsbacke durch eine Druckerhöhung so gesteigert wird, daß ein im wesentlichen linear verlaufendes Bremsmoment resultiert.

2. Verfahren nach Anspruch 1,
**dadurch gekennzeichnet,**
daß die Druckerhöhung durch Aufschalten einer in der Steuerungseinrichtung gespeicherten Druckerhöhungsfunktion erreicht wird.

3. Verfahren nach Anspruch 2,
**dadurch gekennzeichnet,**
daß eine etwa parabelförmige Druckerhöhungsfunktion aufgeschaltet wird.

4. Verfahren nach einem der vorhergehenden Ansprüche,
**dadurch gekennzeichnet,**
daß die Druckerhöhung als Funktion der momentanen Bremsleistung bestimmt wird.

5. Verfahren nach einem der Ansprüche 1 bis 3,
**dadurch gekennzeichnet,**
daß die Druckerhöhung als Funktion der Verzögerung bestimmt wird.

6. Bremseinheit zur Durchführung des Verfahrens nach einem der Ansprüche 1 bis 5, welche mindestens eine Zuspanneinrichtung, mindestens eine Bremsscheibe mit mindestens einer Reibfläche und mindestens einer Bremsbacke mit mindestens einem Reibbelag aufweist, der bei der Betätigung der Bremseinheit über eine Spannkraft Fs der Bremsbacke auf die mindestens eine Reibfläche der mindestens einen Bremsscheibe einwirkt, wobei zumindest die mindestens eine Reibfläche der mindestens einen Bremsscheibe aus einem Metall-Keramik-Verbundwerkstoff (CMC) gebildet ist, wobei mindestens eine Steuerungseinrichtung vorgesehen ist, mittels derer die Spannkraft Fs der mindestens Bremsbacke beim Bremsvorgang so steuerbar ist, daß ein definiertes Bremsmoment Mb als Funktion der Spannkraft Fs resultiert,
**dadurch gekennzeichnet,**
daß die Bremseinheit ein elektrohydraulisches Betätigungssystem aufweist, mittels dessen die Spannkraft der Bremsbacke durch eine Druckerhöhung so steigerbar ist, daß ein im wesentlichen linear verlaufendes Bremsmoment resultiert.

7. Bremseinheit nach Anspruch 6,
**dadurch gekennzeichnet,**
daß die Steuereinrichtung auf den hydraulischen Druck in der Zuspanneinrichtung einwirkt.

8. Bremseinheit nach einem der vorhergehenden Ansprüche,
**dadurch gekennzeichnet,**
daß zumindest die Reibfläche der Bremsscheibe aus einem Aluminium-Keramik-Verbundwerkstoff oder einem Silizium-Keramik-Verbundwerkstott gebildet ist.

9. Bremseinheit nach einem der vorhergehenden Ansprüche,
**dadurch gekennzeichnet,**
daß zumindest die Reibfläche der Bremsscheibe aus einem faserverstärkten Verbundwerkstoff gebildet ist.

10. Bremseinheit nach Anspruch 9,
**dadurch gekennzeichnet,**
daß der Verbundwerkstoff als Verstärkungsfasern Kohlefasern und/oder Siliziumcarbidfasern aufweist.

11. Bremseinheit nach einem der Ansprüche 9 oder 10,
**dadurch gekennzeichnet,**
daß der Verbundwerkstoff als Verstärkungsfasern Langfasern, vorzugsweise in Form von Fasergeweben oder Fasergelegen, aufweist.

12. Bremseinheit nach einem der Ansprüche 9 oder 10,
**dadurch gekennzeichnet,**
daß der Verbundwerkstoff als Verstärkungsfasern Kurzfasern, vorzugsweise isotrop orientierte Kurzfasern aufweist.

13. Bremseinheit nach einem der vorhergehenden Ansprüche,
**dadurch gekennzeichnet,**
daß der Verbundwerkstoff als Keramik-Komponente eine Siliziumcarbid-Keramik oder eine Aluminiumoxid-Keramik aufweist.

14. Bremseinheit nach einem der vorhergehenden Ansprüche,
**dadurch gekennzeichnet,**
daß die Reibfläche der Bremsscheibe einstückig mit der Bremsscheibe ausgebildet ist und beide aus demselben Material bestehen.
